# EUROPEAN PATENT APPLICATION

(11) **EP 0 695 015 A2**
(43) Date of publication of application: **31.01.1996**
(21) Application number: 95830332.3
(22) Date of filing: 27.07.1995
(51) Int. Cl.: H02H 5/12, H02H 3/16

(54) **Safety device for electrical systems**

(30) Priority: 29.07.1994 IT BO940365
(71) Applicant: Albanelli, Alfredo, I-40068 San Lazzaro Di Savena (Bologna) (IT)
(72) Inventor: Albanelli, Alfredo, I-40068 San Lazzaro Di Savena (Bologna) (IT)
(74) Representative: Lanzoni, Luciano

(57) **Abstract**

A safety device (1) for electrical systems used in particular to connect at least one electrical appliance that is a circuit (4) to a supply mains which is not earthed comprising: - first connecting means (2) to the supply mains; -second connecting means (3) to the circuit (4); - a first connecting line (L1) and a second connecting line (L2) linking the main conductors to those of the circuit; - a clipping and smoothing circuit (EC2) fed by a feeding circuit (CE) connected, on its inlet (2i) to the earth of the circuit; the said clipping and smoothing circuit (EC2) is capable of releasing a first electrical signal from its outlet (2u) when receiving a voltage through the said inlet (2i); - disactivating means (S) operating on the first connecting line (L1) and on the second connecting line (L2) capable of disconnecting the said lines on receiving the said first electric signal from the clipping and smoothing circuit (EC2) that is on detecting a dispersion towards the earth from the said feeding circuit.

## Description

The present invention relates to a safety device for electrical systems in particular for those systems without earthing.

As is well known, all electrical appliances are to be earthed by means of a low resistance conductor (slightly lower than some ohm units), so as to protect the operators from electric shocks. In the old electric systems the earthing was not foreseen.

To prevent electrocution damages in buildings which are not fitted with the main earth lead, today's technology foresees the use of a differential switch as an electrical board for the interior wiring which cuts out the power on detecting power unbalances caused by the contact with a good conductor such as the human body, meaning the power passing through the good conductor such as the human body itself. As a consequence, the human body receives an electric shock due to dispersion of the power to the ground which even though is very quick can be extremely intense. This can be very dangerous for anybody, and especially for those people in weak physical conditions. It is also to be taken into consideration the fact that in the renovation of old buildings even though each single flat is fitted with earthing, the said earthing has no use if the building itself has not previously been fitted with the main earth lead.

In such a case, a power dispersion towards the ground energizes the earth lead and this is not detected by the differential switch, thereby producing a potentially dangerous situation.

The prior art devices above described do not detect losses of water from pipes or washing equipments such as washing machines, dishwashers etc.

Furthermore, it is not possible to guarantee a high standard of safety in the use of electrically operated tools (i.e. drills) close to power conductors, thus being able to cause danger.

The present invention resolves the above mentioned problems thanks to a device fitted to the main magnetometric differential switch between the mains and the electrical system to be controlled so as to make safe those electrical systems that are not fitted with earthing facilities.

The device permanently controls the system automatically and on detecting power dispersions, it cuts off the power supply. In this way, the device apart from detecting an emergency situation prevents the electrocution of anybody who comes into contact with bodies which are live.

Thanks to the present invention it is furthermore possible to detect water losses and use tools such as electrical drills with greater safety, thus preventing interaction between the said tools and conductive bodies.

The technical features of the present invention together with its aims are illustrated in the appended claims. The advantages of the present invention will become clearer in the description that follows made with reference to the accompanying drawings which represent a preferred embodiment here illustrated in the form of a non-limiting example, and in which:
- Fig. 1 shows a schematic view in blocks of an embodiment of the present invention;
- Fig. 2 and 3 show schematically two possible embodiments of the present invention.

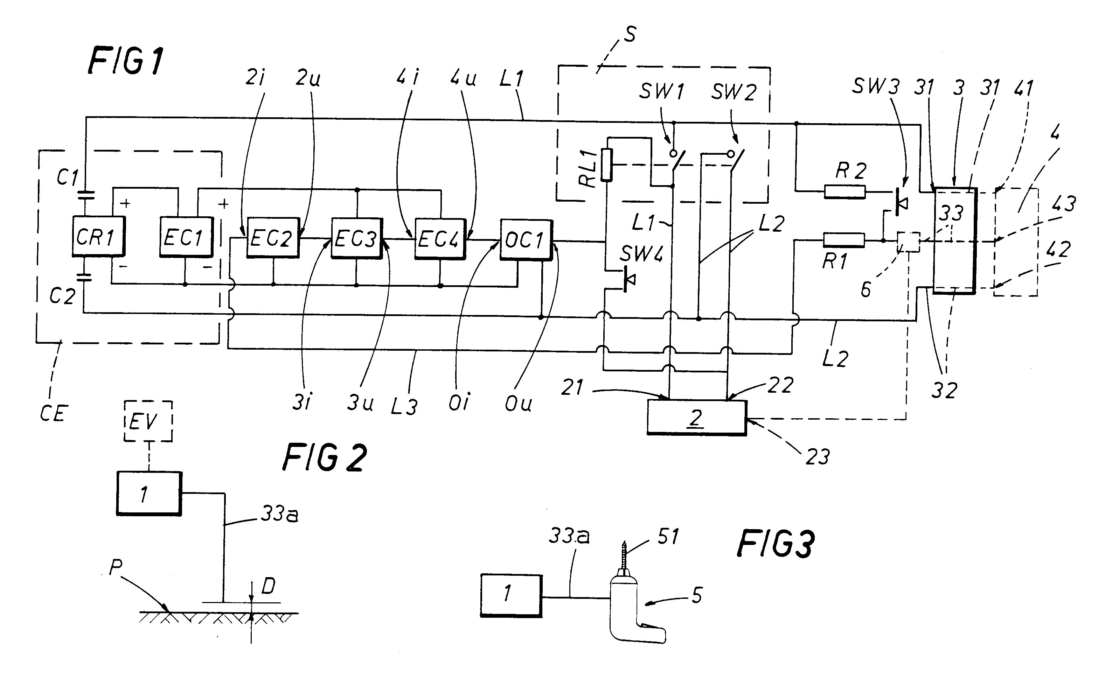

With reference to the accompanying drawings, Fig.1 shows a safety device according to the present invention which can be used for electrical systems that are without earthing.

The above mentioned device, denoted with 1 as a whole, foresees first connection means (2) to the supply mains which are fitted with a first connecting part (21) and a second connecting part (22) each of which in turn can be connected with two conductors of the said supply mains, i.e. with the phase or to the earthed neutral. The device then foresees second connection means (3) which are fitted with a third connecting part (31) and a forth connecting part (32) each of which can be connected to two conductors (41, 42) (i.e. with the phase or to the earthed neutral) of the said circuit (4). The said second connecting means (3) are also fitted with a fifth connecting part (33) which is destined to the earth (43) of the circuit (4). In practice, the second connecting means can connect a single device or a whole system.

The first connecting part (21) is connected to the third connecting part (31) by means of a first connecting line (L1); likewise, a second connecting line (L2) connects the second connecting part (22) to the forth connecting part (32).

Basically, the connecting means (2) and (3) allow an electric coupling between the mains and the circuit, thus connecting lines L1 and L2 to the relevant phase and earthed neutral.

CE denotes a whole feeding circuit located downstream and connected to the first connection means (2) with respect to the supply mains. The CE circuit is preferably constituted by mains voltage reducing means C1, C2 (i.e. condensers), rectifying means CR1 (i.e. a bridge of diodes), and by filtering and stabilizing means EC1.

EC2 denotes a clipping and smoothing circuit which is connected to the feeding circuit CE. It also exhibits a first inlet 2i and a first outlet 2u.

The fifth connecting part (33) (linked to the earth 43 of the circuit) is connected to the first inlet 2i through a third line L3 on which a high capacity resistor R1 (of the order of megohm units) is foreseen. From the first outlet 2u, the clipping and smoothing circuit EC2 releases a first electric signal on receiving an inlet voltage through a third line L3.

EC3 denotes a timer circuit which is constituted, for example, by a monostable circuit showing a second inlet 3i, in turn connected to the clipping and smoothing circuit EC2, and to a second outlet 3u; the timer circuit EC3 releases a second electrical signal as a result of a permanent inlet voltage from the second inlet 2i, whose intensity is higher than a predetermined minimum time; this process is used to exclude the influence of short-lasting disturbances, such as transients that may occur on the network conductors, from the working of the device 1.

The device comprises a pulse generator EC4 composed, for example, of a free-running multivibrator which envisages the presence of a third inlet 4i which, in turn is connected to the clipping and smoothing circuit EC2. The said device foresees also a third outlet 4u which releases pulses towards activation means OC1 which will be described hereunder.

On the connecting lines L1 and L2 are foreseen disconnecting means S which, once activated, can disconnect the lines. The said disconnecting means S can be composed of an electrically operated commutator RL1 (i.e. a step relay as shown in Fig. 1 or a bistable relay) which operates two switches SW1 and SW2 of the first L1 and the second L2 connecting lines.

The activation means OC1 of the said disconnecting means S can be composed of a Triac optic coupler fitted with a relevant protection grid. They exhibit a fourth inlet Oi which, in turn is connected to a third outlet 4u (that of the pulse generator EC4) and a fourth outlet Ou which is linked to the disconnecting means S in such a way as to activate them when they receive at least one of the said pulses at the fourth inlet Oi.

The device also comprises a self testing element which is represented by a testing button SW3. Through a high capacity resistor (of the order of Megohm units), the said testing button SW3 links the fifth connecting part 33, which in turn is linked to the earth 43 of the circuit, to either the first connecting line L1 or the second L2 (in Fig. 1 it is linked to the line L1).

Thanks to the device 1, the mains voltage is suitably stepped down by the condensers C1 and C2, then rectified by the bridge of diodes CR1 and subsequently filtered and stabilized by the circuit EC1. The low direct voltage which is then obtained is fed to the electronic circuit which is formed by blocks EC2, EC3, EC4 and OC1. As the feeding circuit CE is symmetrical to the two networks conductors, there is a pulsating voltage (half wave voltage) on the negative or positive poles of the low direct voltage. The intensity of the said pulsating voltage is half that of the network. Thanks to the above described symetrical arrangement, the device (1) can be plugged in regardless of the connecting direction of an extension plug (connecting means 3) as the said device (1) is capable of reacting to dispersions towards the ground of the earth conductor as well as to dispersions towards the ground of the phase conductor. The earth (43) of the electrical appliances or that of the circuit (4) is connected to inlet line L3 and consequently, through the resistor R1 of the order of some Megohm units (preferably between 5 and 8), to the clipping and smoothing circuit EC2. For this reason, any dispersion from any conductor of the mains to the earth of the equipment fitted with the said device creates a pulsating voltage at the inlet 2i of the circuit EC2, thus bringing about a direct voltage at the outlet of the said circuit EC2. The said voltage passes through the inlet of the monostable circuit EC3 whose aim is to eliminate the effect of the transients which may appear on the main conductors. There will be a voltage at the outlet 3u of the monostable EC3 providing that the inlet voltage on 3i remains for a minimum time (determined by the time constant of the monostable). Disturbances of a short duration will not affect the functioning of the device 1. The outlet 3u of EC3 passes through the inlet 4i of EC4 which is a free-running multivibrator. In the presence of a logic level 1 at its inlet, the said free-running multivibrator generates a train of pulses at the outlet (from 4u) which excite the coil of the relay RL1 through the Triac optic coupler OC1. Once excited, the relay RL1 disconnects both lines L1 and L2 (through SW1 and SW2) which feed the appliance assisted by the above mentioned device 1, the device 1 itself, thus blocking its functioning in the off position. Through a resistor R2 (which can be of one megohm), the test button SW3 connects one of the network conductors to the earth 43 of the circuit 4 simulating a dispersion which causes the device 1 to switch off. SW4 denotes a resetting button which connects one of the two network conductors to the relay RL1. The said button reactivates the coil of the said relay RL1, thus feeding the appliance 4 assisted by the device 1 and the device 1 itself. Should the dispersion persist, the device cuts off again the power supply. The resetting button SW4 can be foreseen on the device 1 or far from it so as to put it into service more easily.

In practice, all earthed appliances behave as the network neutral conductor and so, if connected to line 3 of the earth, cause the device to switch off.

This permits some embodiments of the device which are illustrated in Figs. 2 and 3.

In the embodiment shown in Fig.2, the device is used as a water detector. If, for example, the device 1 is used for the safety of washing machines or dishwashers and other such machines it is possible to extend the fifth connecting means 33 through an additional line 33a composed of a conductor which extends towards the floor P up to an amount which spaces the said conductor from the floor itself with a distance which is identical to the height D of the water level to be detected. Apart from cutting off the power supply, it is also possible to cut off the water supply by connecting the said device with a solenoid valve EV.

The device 1 can also be used as a wall metal detector by connecting the third line L3 to an electrical appliance at one of its conductive ends 51 through an additional line 33a. It is very important to fit a drill 5, namely its spindle with the said device 1. If the wall is not very damp the device 1 does not switch off (the same happens with walls in normal conditions). When the drill comes into contact with a metal tube or an electric conductor, it will automatically stop. For this specific use and to reduce the dimensions of the the device so as to incorporate it to the drill itself, the relay can be substituted by a Triac eliminating the free-running multivibrator.

As an alternative, the device can be coupled to a drill without incorporating it into the drill itself by placing the device 1 between the mains and the plug of the drill, thus extending the additional line 33a up to connecting means capable of establishing an electric contact with the spindle.

To continue to use appliances or connecting means incorporating the said device when the mains are already fitted with the earth (23), it is possible to foresee a commutator (6) capable of disconnecting the device 1, thus interrupting the third line L3. The said commutator (6) connects the earth 43 to the main earth 23, as shown in Fig.1, or the first L1 to the second L2.

When wanting to make safe a flat whose water supply system is not fitted with efficient earthing facilities, it is advisable to use the device and carry out the earthing of the water supply system by earthing the latter by means of suitable earth plates.

## Claims

1. A safety device for electrical systems to connect at least one electrical appliance, that is a circuit to unearthed supply mains characterized by the fact that it comprises:
- first connecting means (2) to the said supply mains fitted with a first connecting part (21) and a second connecting part (22) to establish a connection with two conductors of the said supply mains;
- second connecting means (3) fitted with a third connecting part (31), a fourth connecting part (32) which is equipped with means for the connection to two conductors (41, 42) of the said circuit (4), and a fifth connecting part (33) which exhibits means of connection to the earth (43) of the said circuit (4);
- a first connecting line (L1) and a second connecting line (L2) which link the said first connecting part (21) and the said second connecting part (22) to the said third connecting part (31) and the said fourth connecting part (32);
- a feeding circuit (CE);
- a clipping and smoothing circuit (EC2) supplied by the said feeding circuit (CE) showing a first inlet (2i) to which is linked the said fifth connecting part (33) and a first outlet (2u) by means of a third line (L3); from the said third line (L3), the said clipping and smoothing circuit (EC2) releases a first electric signal on receiving at inlet a voltage through the said third line (L3);
- disconnecting means (S) operating on the said first connecting line (L1) and the second connecting line (L2) which are capable of disconnecting the said lines on receiving the said first electric signal from the said clipping and smoothing circuit (EC2).

2. A safety device for electrical systems as in claim 1, characterized by the fact that it comprises a timer circuit (EC3) showing a second inlet (3i), which is connected to the said clipping and smoothing circuit (EC2), and a second outlet (3u) which is connected to the said disconnecting means (S); the said timer circuit (EC3) is equipped with means capable of releasing on outlet a second electric signal meant to operate the said disconnecting means (S) when the voltage in the said second inlet (3i) is higher than a predetermined minimum time.

3. A safety device for electrical systems as in claim 1, characterized by the fact that it also comprises:
- a pulse generator (EC4) showing a third inlet (4i) connected to the said clipping and smoothing circuit (EC2), and a third outlet (4u);
- activation means (OC1) of the said disconnecting means (S) showing a fourth inlet (Oi), connected to a third outlet (4u), and a fourth oulet (Ou) connected to the said disconnecting means (S).

4. A safety device for electrical systems as in claim 2, characterized by the fact that the said timer circuit (EC3) is a monostable circuit.

5. A safety device for electrical systems as in claim 3, characterized by the fact that the said pulse generator (EC4) is a free-running multivibrator, the said activation means (OC1) are a Triac optic coupler, and the said disconnecting means (S) include an electrically operated commutator (RL1) which operates two switches (SW1, SW2) of the said first (L1) and second (L2) connecting lines.

6. A safety device for electrical systems according to claim 1, characterized by the fact that on the said third line (L3) it is foreseen a first, high capacity resistor (R1) of the order of megohm units.

7. A safety device for electrical systems as in claim 1, characterized by the fact that it is foreseen a device tester made of a testing button (SW3) which connects the said fifth connecting part (33), which in turn is connected to the earth (43) of the said circuit, either to the first (L1) or the second (L2) connecting lines by means of a second high capacity resistor (R2) of the order of megohm units.

8. A safety device for electrical systems as in claim 1, characterized by the fact that the said fifth connecting part (33) is linked to a conductive end (51) of an electrical appliance (5) by means of an additional line (33a).

9. A safety device for electrical systems as in claim 1, characterized by the fact that the said fifth connecting part (33) is connected to an additional line (33a) represented by a conductor which extends towards the floor (P) up to an amount which spaces the said conductor from the floor itself with a distance which is identical to the height (D) of the water level to be detected.

10. A safety device for electrical systems as in claim 1, characterized by the fact that it comprises:
- first connection means (2) to the supply mains which are fitted with a first connecting part (21) and a second connecting part (22) each of which in turn can be connected with two conductors of the said supply mains;
- second connection means (3) which are fitted with a third connecting part (31) and a forth connecting part (32) each of which can be connected to two conductors (41, 42) of the said circuit (4);
- a fifth connecting part (33) exhibiting means for the connection to the earth (43) of the said circuit (4);
- a first connecting line (L1) and a second connecting line (L2) linking the said first connecting part (21) and the second connecting part (22) respectively to the third connecting part (31) and to the fourth connecting part (32);
- a feeding circuit (CE) located downstream and connected to the first connection means (2) with respect to the supply mains. The CE circuit is preferably constituted by mains voltage reducing means (C1, C2), rectifying means (CR1), and filtering and stabilizing means (EC1);
- a clipping and smoothing circuit (EC2) connected to the feeding circuit (CE) exhibiting a first inlet (2i) to which it is connected by means of a third line (L3) on which are foreseen a high capacity resistor (R1), the said fifth connecting part (33) and a first outlet (2u) from which the said clipping and smoothing circuit releases a first electric signal on receiving an inlet voltage through the said third line (L3);
- a timer circuit (EC3) showing a second inlet (3i), which is connected to the said clipping and smoothing circuit (EC2), and a second outlet (3u); the said timer circuit (EC3) is equipped with means capable of releasing on outlet a second electric signal when the voltage in the said second inlet (2i) is higher than a predetermined minimum time;
- a pulse generator (EC4) showing a third inlet (4i) connected to the said clipping and smoothing circuit (EC2), and a third outlet (4u) capable or releasing a train of pulses;
- disconnecting means (S) operating on the first connecting line (L1) and the second connecting line (L2) capable of disconnecting the said lines once activated;
- activation means (OC1) of the said disconnecting means (S) showing a fourth inlet (Oi), connected to a third oulet (4u), and a fourth oulet (Ou) connected to the said disconnecting means (S) in such a way as to activate the said disconnecting means (S) on receiving at least one of the said train of pulses on the said fourth inlet (Oi).
